# EUROPEAN PATENT APPLICATION

(11) **EP 2 639 245 A1**
(43) Date of publication of application: **18.09.2013**
(21) Application number: 13158793.3
(22) Date of filing: 12.03.2013
(51) Int. Cl.: C08C 19/20, B60C 1/00, C08C 19/22, C08F 236/06, C08F 236/10, C08L 9/00, C08L 9/06

(54) **Rubber composition and pneumatic tire**

(30) Priority: 14.03.2012 US 201213419551
(71) Applicant: The Goodyear Tire & Rubber Company, Akron, Ohio 44316 (US)
(72) Inventor: Mruk, Ralf, L-9164 Lipperscheid (LU); Roskamp, Robert Fokko, D-54294 Trier (DE)
(74) Representative: Kutsch, Bernd

(57) **Abstract**

The invention relates to a rubber composition comprising a functionalized elastomer having the structure I

X-[-S-Z]ₙ (I)

where X is a polymer derived from a monomer comprising at least one conjugated diene monomer and optionally at least one vinyl aromatic monomer; S is sulfur; -[-S - Z] is an oligopeptide radical with pendant sulfur S or modified oligopeptide radical with pendant sulfur S, and n is the number of -[-S - Z] groups bonded to X. The invention also relates to a pneumatic tire comprising at least one component, the at least one component comprising a rubber composition, the rubber composition comprising a functionalized elastomer comprising: a polymeric backbone chain derived from a monomer comprising at least one conjugated diene monomer and optionally at least one vinyl aromatic monomer; and a functional group bonded to the backbone chain, the functional group comprising an oligopeptide or modified oligopeptide.

## Description

### Background

Supramolecular bonds between different polymer chains or polymer chains and filler particles can be formed by different non-covalent interactions. These include electrostatic interactions due to polymer bound ionic groups, dipole-dipole interactions such as hydrogen bonds due to polymer bound polar groups and coordinative interactions due to polymer bound ligands and dispersed metal ions. Supramolecular interactions represent a supplementary mechanism of polymer network formation in elastomers in addition to the classical covalent sulfur network. The formation of the additional network has the potential to enhance the mechanical compound properties and to improve the tear behavior in cured rubber compounds. Due to their high polarity, the introduced functional groups could also improve polymer-filler interactions and modify the surface polarity of tire tread compounds which might have a positive influence on wet tire performance.

### Summary

The present invention is directed to a rubber composition in accordance with claim 1 and to a pneumatic tire in accordance with claim 10 or 12.

Dependent claims refer to preferred embodiments of the invention

### Brief Description of the Drawings

Figure 1 shows rheological properties as a function of temperature for a styrene-butadiene elastomer.
Figure 2 shows rheological properties as a function of temperature for a styrene-butadiene elastomer functionalized with glutathione according to the present invention.

### Detailed Description

There is disclosed a pneumatic tire comprising at least one component, the at least one component comprising a rubber composition comprising:
a functionalized elastomer comprising: a polymeric backbone chain derived from a monomer comprising at least one conjugated diene monomer and optionally at least one vinyl aromatic monomer; and a functional group bonded to the backbone chain, the functional group comprising an oligopeptide or modified oligopeptide.
In one embodiment, the functionalized elastomer has the structure I

   X-[-S-Z]ₙ (I)

   where X is a polymer derived from a monomer comprising at least one conjugated diene monomer and optionally at least one vinyl aromatic monomer; S is sulfur; -[-S - Z] is an oligopeptide radical with pendant sulfur S or modified oligopeptide radical with pendant sulfur S, and n is the number of -[-S - Z] groups bonded to X.

In one embodiment, the polymer X is a diene based elastomer comprising at least one carbon-carbon double bond. The phrases "rubber or elastomer containing olefinic unsaturation" or "diene based elastomer" as used herein are equivalent and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic rubbers are the homopolymerization products of butadiene and its homologues and derivatives, for example, methyl butadiene (i.e., isoprene), dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers, silicon-coupled and tin-coupled star-branched polymers. In one embodiment, the rubber or elastomers are selected from styrene-butadiene rubber (SBR), polybutadiene rubber (IR), natural rubber (NR), polyisoprene rubber (IR), isoprene-butadiene rubber (IBR), styrene-isoprene rubber (SIR), and styrene-isoprene-butadiene rubber (SIBR).

The polymer X may be derived from various monomers, including conjugated diene monomers and optionally vinyl aromatic monomers. Suitable conjugated diene monomers include 1,3-butadiene and isoprene. Some additional conjugated diolefin monomers that can be utilized include 2,3-dimethyl-1,3-butadiene, piperylene, 3-butyl-1,3-octadiene, 2-phenyl-1,3-butadiene, and the like, alone or in admixture. Suitable vinyl aromatic monomers include vinyl aromatic monomers that contain from 8 to 20 carbon atoms. Usually, the vinyl aromatic monomer will contain from 8 to 14 carbon atoms. Some examples of vinyl aromatic monomers that can be utilized include styrene, 1-vinylnaphthalene, 2-vinylnaphthalene, α-methylstyrene, 4-phenylstyrene, 3-methylstyrene and the like. Styrene and α -methylstyrene are preferred vinyl aromatic monomers for copolymerization with the conjugated diolefin monomers. The most widely used vinyl aromatic monomer is styrene.

In one aspect of this invention, an emulsion polymerization derived styrene/butadiene rubber (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In one embodiment, the oligopeptide radical with pendant sulfur -[-S - Z] comprises from 2 to 20 amino acid residues, wherein at least one amino acid residue is a cysteine residue comprising the pendant sulfur atom.

In one embodiment, the oligopeptide radical with pendant sulfur -[-S - Z] comprises from 2 to 10 amino acid residues, wherein at least one amino acid residue is a cysteine residue comprising the pendant sulfur atom.

In one embodiment, the oligopeptide radical with pendant sulfur -[-S - Z] comprises from 2 to 5 amino acid residues, wherein at least one amino acid residue is a cysteine residue comprising the pendant sulfur atom.

By modified oligopeptide, it is meant that in addition to a peptide grouping of 2 or more amino acid residues, the modified oligopeptide contains additional, non-amino acid or peptide functional group moieties. In one embodiment, the modified oligopeptide radical with pendant sulfur S may be as disclosed in US-A- 6,414,114; 5,679,643; and US-A- 5,223,488, all of which are fully incorporated by reference herein.

In one embodiment, the oligopeptide radical -[-S - Z] is a glutathione radical.

In one embodiment, the oligopeptide radical -[-S - Z] is of formula II

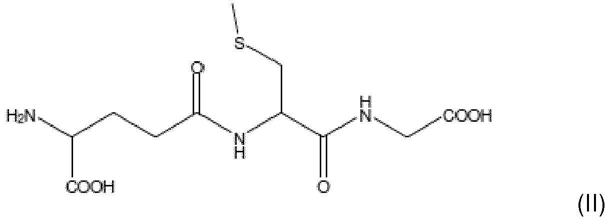

The number n of -[-S-Z] groups bonded to X ranges from 2 to 30 in a given copolymer molecule.

The functionalized elastomer may be produced by various methods. In one embodiment, the functionalized elastomer may be produced by functionalizing the polymer X with a oligopeptide radical with pendant sulfur S. By pendant sulfur S, it is meant that the sulfur atom S exists as an end or side group attached to the main chain in the oligopeptide radical, and is thus available for bonding with a carbon-carbon double bond of the elastomer X. A convenient way for the functionalization of a variety of elastomers is the thiol-ene reaction during which alkene moieties being present in the elastomers are transformed into thioethers by reaction with thiols. This reaction proceeds preferably with vinyl groups as they are present in styrene-butadiene rubbers, butadiene rubbers, and polyisoprene rubbers. In order to allow the functionalization of the elastomers, the -[-S-Z] grouping, where S is sulfur, may be linked to the elastomer X through reaction of the oligopeptide thiol HS-Z with vinyl groups of the elastomer X to form a thioether of formula I. Further details of the thiol-ene reaction as it relates to elastomers may be found by reference to US-A- 6,365,668 and US-A- 7,847,019, both fully incorporated by reference herein.

One step of the method to produce the functionalized elastomer is to obtain a diene based elastomer comprising at least one carbon-carbon double bond.

A second step of the method is obtaining an oligopeptide with pendant thiol group.

A third step of the method is reacting the diene based elastomer with the functionalizing agent to form the functionalized elastomer. During reacting of the functionalizing agent with the elastomer, the functional group Z is linked to the first polymer through reaction of the thiol S with the unsaturated carbon-carbon bond of the elastomer.

In one embodiment, the functionalizing agent is reacted with the elastomer in a suitable solvent in the presence of a free-radical initiator via a thiol-ene reaction as is known in the art, see for example Macromolecules 2008, 41, 9946-9947. In one embodiment, the free-radical initiator is selected from the group consisting of 2,4,6-trimethylbenzoyldiphenylphosphine oxide and azobisisobutyonitrile (AIBN). Suitable solvent include hydrocarbon solvents such as hexane and cyclohexane, and tetrahydrofuran (THF), and the like.

The rubber composition may optionally include, in addition to the functionalized elastomer, one or more rubbers or elastomers containing olefinic unsaturation. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of about 5 to about 50, preferably about 9 to about 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein silicas commercially available from PPG Industries under the Hi-Sil trademark with designations 210 and 243; silicas available from Rhodia, with, for example, designations of Z1165MP and Z165GR, and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-A- 6,242,534; US-A- 6,207,757; US-A- 6,133,364; US-A- 6,372,857; 5,395,891; or US-A- 6,127,488, and plasticized starch composite filler including that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Q - Alk - Sₙ - Alk - Q III

in which Q is selected from the group consisting of 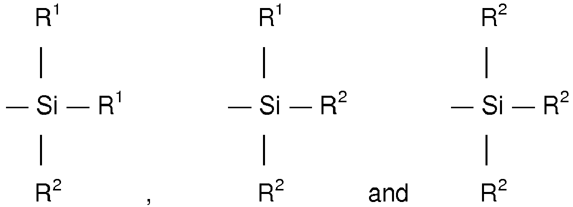 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula III, Q may be 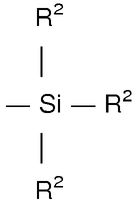 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise about 0.5 to about 10 phr, usually about 1 to about 5 phr. Typical amounts of processing aids comprise about 1 to about 50 phr. Typical amounts of antioxidants comprise about 1 to about 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise about 1 to 5 phr. Typical amounts of fatty acids, if used, which can include stearic acid comprise about 0.5 to about 3 phr. Typical amounts of zinc oxide comprise about 2 to about 5 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, alternatively about 0.8 to about 1.5, phr. In another embodiment, combinations of a primary and a secondary accelerator might be used with the secondary accelerator being used in smaller amounts, such as from about 0.05 to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, truck tire, and the like. In one embodiment, the tire is a passenger or truck tire. The tire may also be a radial or bias.

Vulcanization of the pneumatic tire of the present invention is generally carried out at conventional temperatures ranging from about 100°C to 200°C. In one embodiment, the vulcanization is conducted at temperatures ranging from about 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, the functionalization of a diene based elastomer with an oligopeptide is illustrated, according to the present invention. Styrene-butadiene rubber was functionalized with glutathione by the following synthesis scheme:

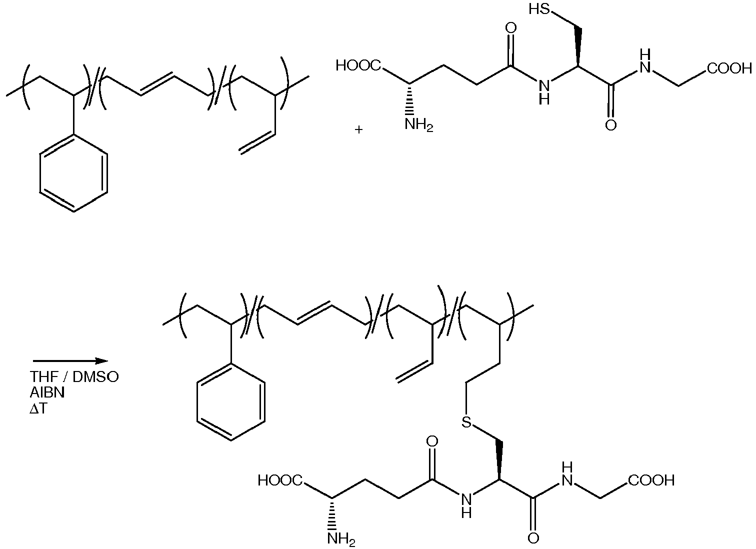

### Synthesis of cllutathione functionalized SBR

For the functionalization of SBR with glutathione, 2g SBR and 0.05 g AIBN were dissolved in 40 ml dry THF. 0.5 g glutathione in 5 ml DMSO were added to the reaction mixture. The resulting solution was degassed under argon atmosphere at room temperature for 2 hours. The mixture was placed in a preheated oil bath at 65°C for at least 24 hours. Because of the good solubility of glutathione in water the product was precipitated three times in water. The product was dried under vacuum.

### Example 2

In this example, the effect of functionalizing a diene based elastomer with an oligopeptide is illustrated. The glutathione-functionalized SBR of Example 1 was combined with toluene to form a mixture containing 10 percent by weight of elastomer. The resulting mixture formed a gel. A control mixture of non-functionalized SBR resulted in complete dissolution of the SBR in toluene. The gel formation in the case of the functionalized SBR was surprising and unexpected, in that the non-functionalized SBR was fully soluble in the solvent. The formation of the gel in toluene by the glutathione-functionalized SBR suggests interaction between the glutathione moieties sufficient to prevent dissolution of the functionalized elastomer. While not wishing to be bound any theory, this behavior may result from supramolecular interactions of the glutathione moieties as described earlier herein.

### Example 3

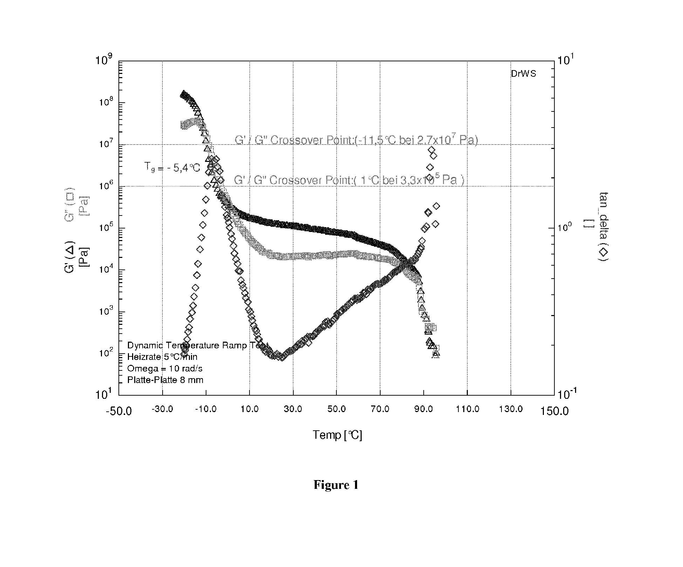

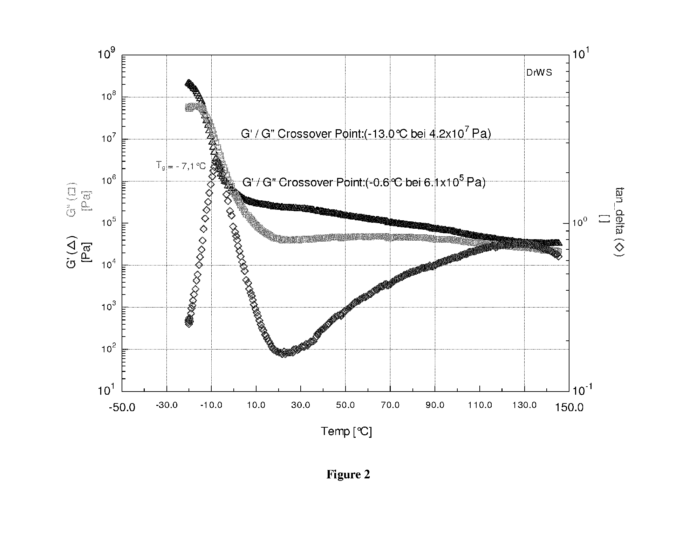

In this example, rheological properties are illustrated for a diene based elastomer functionalized with an oligopeptide according to the present invention. Figures 1 and 2 show the rheological behavior of the non-functionalized (Figure 1) and glutathione- functionalized SBR (Figure 2) of Example 1 which were investigated using a parallel plate rheometer (8 mm plates) and a heating rate of 5°C per minute (Ω=10 rad/s ≈ 1.59 Hz).

The behavior illustrated in Figure 2 suggests that the functionalized SBR exhibits interaction between glutathione groups. Figure 2 shows a broad rubbery plateau in dynamic modulus G' for the functionalized elastomer extending past 130 °C, with resistance to flow at lower temperatures caused by interaction of the glutathione moieties. By contrast, the control non-functionalized elastomer shows a much narrower rubbery region in G' with flow of the elastomer occurring at about 70 °C. The expansion of the rubbery plateau region for the functionalized elastomer as compared to control was surprising and unexpected.

## Claims

1. A rubber composition comprising a functionalized elastomer having the structure I
X-[-S-Z]ₙ (I)
where X is a polymer derived from a monomer comprising at least one conjugated diene monomer and optionally at least one vinyl aromatic monomer; S is sulfur; -[-S - Z] is an oligopeptide radical with pendant sulfur S or modified oligopeptide radical with pendant sulfur S, and n is the number of -[-S - Z] groups bonded to X.

2. The rubber composition of claim 1, wherein the oligopeptide radical with pendant sulfur -[-S - Z] comprises from 2 to 20 amino acid residues, wherein at least one amino acid residue is a cysteine residue comprising the pendant sulfur atom.

3. The rubber composition of claim 1, wherein the oligopeptide radical -[-S - Z] is a glutathione radical.

4. The rubber composition of claim 1, wherein the oligopeptide radical -[-S - Z] is of formula (II)

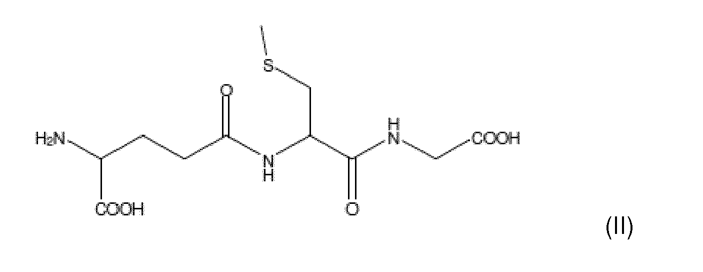

5. The rubber composition of at least one of the previous claims, wherein the number n of -[-S-Z] groups bonded to X ranges from 2 to 30 or from 3 to 10.

6. The rubber composition of at least one of the previous claims, wherein X is selected from the group consisting of styrene-butadiene rubber, polybutadiene rubber, natural rubber, polyisoprene rubber, isoprene-butadiene rubber, styrene-isoprene rubber, and styrene-isoprene-butadiene rubber.

7. The rubber composition of at least one of the previous claims, wherein the conjugated diene monomer is selected from the group consisting of 1,3-butadiene, isoprene, 2,3-dimethyl-1 ,3-butadiene, piperylene, 3-butyl-1,3-octadiene, and 2-phenyl-1,3-butadiene.

8. The rubber composition of at least one of the previous claims, wherein the conjugated diene monomer is selected from the group consisting of 1,3-butadiene and isoprene.

9. The rubber composition of at least one of the previous claims, wherein the vinyl aromatic monomer is selected from the group consisting of styrene, 1-vinylnaphthalene, 2-vinylnaphthalene, α-methylstyrene, 4-phenylstyrene, and 3-methylstyrene.

10. A pneumatic tire comprising the rubber composition in accordance with at least one of the previous claims.

11. The pneumatic tire of claim 10 comprising at least one component, the at least one component comprising said rubber composition, wherein the at least one component is selected from the group consisting of a tread, tread cap, tread base, sidewall, apex, chafer, sidewall insert, wirecoat and innerliner.

12. A pneumatic tire comprising at least one component, the at least one component comprising a rubber composition, the rubber composition comprising a functionalized elastomer comprising: a polymeric backbone chain derived from a monomer comprising at least one conjugated diene monomer and optionally at least one vinyl aromatic monomer; and a functional group bonded to the backbone chain, the functional group comprising an oligopeptide or modified oligopeptide.

13. The pneumatic tire of claim 12 comprising the rubber composition in accordance with at least one of the claims 1 to 9.
